# EUROPEAN PATENT APPLICATION

(11) **EP 1 818 597 A2**
(43) Date of publication of application: **15.08.2007**
(21) Application number: 07002412.0
(22) Date of filing: 05.02.2007
(51) Int. Cl.: F17C 5/06

(54) **Method for dispensing compressed gas**

(30) Priority: 10.02.2006 US 352041
(71) Applicant: Air Products and Chemicals, Inc., Allentown, PA 18195-1501 (US)
(72) Inventor: Cohen, Joseph Perry, Bethlehem PA 18017 (US); Hoke, Bryan Clair Jr., Bethlehem PA 18020 (US)
(74) Representative: Schwabe - Sandmair - Marx

(57) **Abstract**

A method and apparatus for dispensing compressed gas to a receiving vessel is provided where the pressure ramp rate is varied as a function of apparent gas density in the receiving vessel. In a first portion of the dispensing process, the time-averaged pressure ramp rate is greater than during a later portion of the dispensing process.

## Description

### BACKGROUND OF THE INVENTION

The present invention relates to a method and apparatus for dispensing compressed gas. More particularly, the present invention is directed to a method useful for transferring a compressed gas from a compressed gas source into one or more receiving vessels. More specifically, the present invention is directed to a method useful for dispensing hydrogen into a hydrogen vehicle.

Because of the interrelationship between the temperature, pressure, and density of gases, the amount of hydrogen, H₂, (or compressed natural gas (CNG)) that can safely be introduced into a receiving vessel, such as a vehicle storage vessel, during fueling necessarily depends upon factors such as the volume, design pressure, and temperature of the vessel, and the temperature and pressure of the compressed gas inside the vessel. Industry convention sets the pressure rating for H₂ fuel vessels at the standard temperature of 15 degrees Celsius, so nominal pressure ratings such as 250 bar (25 MPa), 350 bar (35 MPa), 500 bar (50 MPa) and 700 bar (70 MPa), correspond to an internal gas temperature of 15 degrees Celsius. During rapid fueling of hydrogen, the internal vessel temperature will typically rise about 50 degrees Celsius due to adiabatic compression of the gas and the reverse Joule-Thompson effect. After the vessel is filled, the temperature and pressure inside the vessel will decrease as the gas cools. Wide variations in ambient temperature above or below the standard condition of 15 degrees Celsius can also have a significant effect on the indicated pressure inside the vessel during and after fueling.

As referred to herein, a compressed gas includes pressurized gas and supercritical fluids. A pressurized gas is a fluid below its critical pressure and below its critical temperature. A supercritical fluid is a fluid above at least one of its critical pressure and its critical temperature.

In the context of this disclosure, reference to fueling comprises providing with fuel and/or providing with additional fuel (i.e. refueling).

It is desirable to have a method for dispensing compressed gas from a compressed gas source to a receiving vessel until the density in the receiving vessel reaches a preselected or target density without the problem or risk of overfilling.

It is desirable to have a method for dispensing compressed gas from a compressed gas source to a receiving vessel and providing an accurate final gas density in the receiving vessel.

It is desirable to have a method for dispensing compressed gas from a compressed gas source to a receiving vessel and providing a complete fill while at no time exceeding the rated pressure in the receiving vessel. By improving the accuracy of the gas density calculation, the target density may approach the maximum rated density with less concern of exceeding the maximum rated density.

### BRIEF SUMMARY OF THE INVENTION

The present invention relates to a method for dispensing a compressed gas from a compressed gas source into a receiving vessel. Flow of the compressed gas is initiated by a means for controlling pressure ramp rate thereby allowing the transfer of the compressed gas from the compressed gas source to the receiving vessel within a first pressure ramp rate range. An electronic controller means transmits a first signal or a first series of signals to the means for controlling pressure ramp rate thereby maintaining a pressure ramp rate of the compressed gas within the first pressure ramp rate range by the means for controlling pressure ramp rate on condition that the apparent value of the gas density in the receiving vessel is less than or equal to an intermediate density value. The electronic controller means transmits a second signal or a second series of signals to the means for controlling pressure ramp rate to either change or maintain the pressure ramp rate of the compressed gas within a second pressure ramp rate range by the means for controlling pressure ramp rate on condition that the apparent value of the gas density in the receiving vessel is greater than or equal to the intermediate density value. The time-averaged pressure ramp rate of the second pressure ramp rate range is less than the time-averaged pressure ramp rate of the first pressure ramp rate range. The electronic controller means transmits a third signal or a third series of signals to the means for controlling pressure ramp rate to terminate the flow of the compressed gas by the means for controlling pressure ramp rate on condition that the apparent value of the gas density in the receiving vessel is equal to or greater than a target density value. The target density value is greater than the intermediate density value.

The method of present invention may comprise connecting a dispensing connector to the receiving vessel thereby providing a fluid communication between the compressed gas source and the receiving vessel. The method of present invention may comprise verifying an authorized user prior to initiating the flow of the compressed gas.

The method of the present invention may comprise determining the target density value for the receiving vessel and storing the target density value in the electronic controller means.

The method of the present invention may comprise determining the intermediate density value and storing the intermediate density value in the electronic controller means.

The method of the present invention may comprise repeatedly calculating the apparent density of the compressed gas in the receiving vessel thereby obtaining the apparent value of the gas density in the receiving vessel. At least one of a density sensor, a pressure sensor, and a temperature sensor may be used for obtaining the apparent value of the gas density in the receiving vessel. Alternatively or in addition, the apparent value of gas density in the receiving vessel may be determined by measuring an accumulated quantity of gas transferred.

The method of the present invention may comprise waiting at least 1 second for the receiving vessel to stabilize after the step of transmitting the third signal or third series of signals, obtaining the apparent value of the gas density in the receiving vessel at least one of a density sensor, a pressure sensor, and a temperature sensor, and transmitting a fourth signal or fourth series of signals from the electronic controller means to the means for controlling pressure ramp rate thereby allowing the flow of compressed gas from the compressed gas source to the receiving vessel if the apparent value of the gas density in the receiving vessel is less than the target density value.

### BRIEF DESCRIPTION OF SEVERAL VIEWS OF THE DRAWINGS

FIG. 1 is a schematic view of an embodiment of the present invention for dispensing compressed gas having a pressure sensor and temperature sensor.

FIG. 2 is a schematic view of an embodiment of the present invention for dispensing compressed gas having a density sensor and optionally a temperature sensor.

FIG. 3 is a schematic view of an embodiment of the the present invention for dispensing compressed gas having a density sensor and a means for measuring an accumulated quantity of compressed gas dispensed.

FIG. 4 is a schematic view of an embodiment of the present invention for dispensing compressed gas having a pressure sensor, a temperature sensor, and a means for measuring an accumulated quantity of compressed gas dispensed.

FIG. 5 is a plot of apparent value of density as a function of elapsed time for dispensing hydrogen using a constant, relatively fast pressure ramp rate.

FIG. 6 is a plot of apparent value of density as a function of elapsed time for dispensing hydrogen using a constant, relatively slow pressure ramp rate.

FIG. 7 is a plot of apparent value of density as a function of elapsed time for dispensing hydrogen using a two-stage pressure ramp rate.

### DETAILED DESCRIPTION OF THE INVENTION

The current invention relates to a method for dispensing a compressed gas from a compressed gas source into a receiving vessel. Flow of the compressed gas is initiated by a means for controlling pressure ramp rate thereby allowing the transfer of the compressed gas from the compressed gas source to the receiving vessel within a first pressure ramp rate range. An electronic controller means transmits a first signal or a first series of signals to the means for controlling pressure ramp rate thereby maintaining a pressure ramp rate of the compressed gas within the first pressure ramp rate range by the means for controlling pressure ramp rate on condition that the apparent value of the gas density in the receiving vessel is less than or equal to an intermediate density value. The electronic controller means transmits a second signal or a second series of signals to the means for controlling pressure ramp rate to either change or maintain the pressure ramp rate of the compressed gas within a second pressure ramp rate range by the means for controlling pressure ramp rate on condition that the apparent value of the gas density in the receiving vessel is greater than or equal to the intermediate density value. The time-averaged pressure ramp rate of the second pressure ramp rate range is less than the time-averaged pressure ramp rate of the first pressure ramp rate range. The electronic controller means transmits a third signal or a third series of signals to the means for controlling pressure ramp rate to terminate the flow of the compressed gas by the means for controlling pressure ramp rate on condition that the apparent value of the gas density in the receiving vessel is equal to or greater than a target density value. The target density value is greater than the intermediate density value.

The indefinite articles "a" and "an" as used herein mean one or more when applied to any feature in embodiments of the present invention described in the specification and claims. The use of "a" and "an" does not limit the meaning to a single feature unless such a limit is specifically stated. The definite article "the" preceding singular or plural nouns or noun phrases denotes a particular specified feature or particular specified features and may have a singular or plural connotation depending upon the context in which it is used. The adjective "any" means one, some, or all indiscriminately of whatever quantity. Likewise, reference to "an embodiment" does not limit the meaning to a single embodiment.

The compressed gas may be hydrogen gas and/or compressed natural gas.

"Pressure ramp rate" is defined as pressure increase per unit time in the receiving vessel. The pressure ramp rate may be controlled by controlling the flow rate and/or varying the flow resistance by a valve, for example.

The first pressure ramp rate range may be 1 to 70 MPa/min or 10 to 35 MPa/min. The second pressure ramp rate range may be 1 % to 50% or 5% to 15% of the first pressure ramp rate range.

Means for controlling pressure ramp rate may comprise one or more valves. The one or more valves may be flow control valves and/or pressure control valves. The one or more valves may be pneumatically or electrically actuated. The means for controlling pressure ramp rate may comprise a shutoff valve for terminating flow (i.e. zero pressure ramp rate). Flow control valves, pressure control valves, and shutoff valves are conventional in the art and may be constructed of any material known in the art compatible with the compressed gas. In case of a pneumatically operated valve, any electric signal must be converted to a pneumatic signal.

A controller is a comparative device that receives an input signal from a measured process variable, compares this value with that of a predetermined control point value (set point), and determines the appropriate amount of output signal required by the control element to provide corrective or adjustive action within a control loop. An electronic controller uses electrical signals and digital algorithms to perform its receptive, comparative and corrective functions. The electronic controller means may comprise one or more electronic controllers and/or a computer.

As defined herein, any reference to gas density comprises functional equivalents of gas density. Density is often defined in terms of a mass density (mass per volume). Functional equivalents of density include molar density (moles per volume), or any density directly related to moles or mass. For the case of a constant volume receiving vessel, the functional equivalents of gas density include mass, moles, and quanities directly related to mass or moles.

The apparent value of gas density may be a value based on measurements and/or calculations. The apparent value of gas density may be determined by measuring the temperature and pressure in the receiving vessel and calculating the apparent gas density using an appropropriate equation of state. The apparent value of gas density may be determined from a density sensor. The density sensor may be a capacitive sensor, vibrating element sensor, or nucleonic sensor. The apparent value of gas density may be determined by acquiring a reference value of gas density in the receiving vessel, measuring the quantity of compressed gas added, and calculating apparent value of gas density.

Inventors have discovered that the response time of sensors used for the dispensing process may adversely affect the accuracy and/or completeness of filling a receiving vessel. For example, for the case where the pressure in the receiving vessel is measured in the transfer conduit, the pressure drop downstream provides an artificially high pressure reading for the receiving vessel. Also for the case where the temperature is used for determining the gas density in the receiving vessel, the temperature may read low until the gas and sensor equilibrate. To overcome this adverse affect of sensor response time, it has be found to be advantageous to decrease the pressure ramp rate during the end portion of the fill.

The time-averaged pressure ramp rate of the second ramp rate range may be less than 50% of the time-averaged pressure ramp rate of the first pressure ramp rate range. The pressure ramp rate may be constant or may vary within the first pressure ramp rate range when the apparent value of the gas density is less than the intermediate density value. The pressure ramp rate may be constant or may vary within the second pressure ramp rate range when the apparent value of the gas density is greater than or equal to the intermediate density value. The pressure ramp rate may decrease within the second pressure ramp rate range as the apparent value of the gas density increases toward the target density value.

The target density value is the apparent value of gas density that is sought at the end of dispensing. The target density value may be input as a specified value or as some percent of maximum allowed or maximum rated gas density value for the receiving vessel. The maximum rated gas density value may be calculated based on the receiving vessel specifications, for example, a manufacturer's specification, for a full vessel. Vessel rated pressure and temperature may be converted to a vessel rated density. The target density value may be within 5% of the maximum rated gas density value of the receiving vessel.

According to an embodiment of the invention, the receiving vessel may be filled such that at no time during the dispensing cycle or afterward does the actual pressure inside the receiving vessel exceed the manufacturer's maximum allowable pressure for that vessel. The target density value may be selected based on the receiving vessel specifications, for example pressure rating, and the anticipated temperature range of the compressed gas inside the receiving vessel. The target density value may be determined automatically from a signal or data from the receiving vessel or may be selected and entered manually by an authorized user and may be stored in the electronic controller. The target density may be a function of the dispensing connector chosen to fill the receiving vessel. The target density value may be selected based on any desired safety margin.

The intermediate density value is a limit value marking the desired transition between a pressure ramp rate within the first pressure ramp rate range and the second pressure ramp rate range. The intermediate density value may be a specified value or may be a function or percentage of the target density. The intermediate density value may be 75% to 95% of the target density value. The intermediate density value may be determined automatically, for example by the electronic controller means, or may be selected and entered manually by an authorized user. The intermediate density value and/or its relationship to target density may be stored in the electronic controller means.

The method according to the invention may comprise one or more of the following characteristics, taken alone or in any possible technical combinations.

The method for dispensing a compressed gas from a compressed gas source to a receiving vessel may comprise connecting a dispensing connector to the receiving vessel thereby providing a fluid communication between the compressed gas source and the receiving vessel.

The method for dispensing a compressed gas from a compressed gas source to a receiving vessel may comprise repeatedly calculating the apparent density of the compressed gas in the receiving vessel thereby obtaining the apparent value of the gas density in the receiving vessel.

A suitably located density sensor may be used to obtain the apparent gas density in the receiving vessel and transmit a density signal to the electronic controller means.

Suitably located pressure and temperature sensors may be used to obtain the apparent gas density in the receiving vessel. The pressure sensor may transmit a pressure signal characterizing pressure to the electronic controller means and the temperature sensor may transmit a temperature signal characterizing temperature to the electronic controller means. The electronic controller means may calculate the apparent gas density using an appropriate equation of state.

The apparent gas density may be determined by measuring an accumulated quantity of compressed gas transferred to the receiving vessel. The measurement of the accumulated quantity transferred may be done by any means known in the art, such as a conventional mass flow meter. After determining a reference gas density, which may be the initial apparent gas density prior to intiating flow of compressed gas from the compressed gas source to the receiving vessel, the apparent gas density in the receiving vessel may be easily calculated from the reference gas density and the accumulated quantity of compressed gas transferred.

A reference gas density at a reference time may be determined from the pressure and temperature in the receiving vessel and/or a density sensor. A predetermined quantity of compressed gas to be added to the receiving vessel to provide an apparent value of gas density equal the intermediate density value can be calculated based on the reference gas density, the intermediate density value, and the volume of the receiving vessel. The calculation may be done manually or by the electronic controller means. The electronic controller means may transmit a first signal or first series of signals to the means for controlling pressure ramp rate to maintain the pressure ramp rate within the first pressure ramp rate range, transferring this predetermined quantity of compressed gas, while the apparent value of gas density is less than or equal to the intermediate density value.

Another predetermined quantity of compressed gas to be added to the receiving vessel to provide an apparent value of gas density equal to the target density value can be calculated based on the reference gas density, the target density value, and the volume of the receiving vessel. The electronic controller means may therefore transmit a second signal or second series of signals to the means for controlling pressure ramp rate to maintain the pressure ramp rate within the second pressure ramp rate range until the apparent value of gas density is or equal to or greater than the target density value. When the quantity of compressed gas transferred provides an apparent value of gas density equal to or greater than the target density value, the electronic controller means may transmit a third signal or third series of signals to the means for controlling pressure ramp rate thereby terminating the flow of compressed gas.

After the electronic contoller means transmits the third signal or third series of signals, the electronic controller means may wait at least 1 second for the receiving vessel to stabilize or equilibrate. Subsequently, the apparent value of gas density may be obtained by at least one of a density sensor, a pressure sensor, and a temperature sensor. The electronic controller means may transmit a fourth signal or fourth series of signals to the means for controlling pressure ramp rate thereby allowing the flow of compressed gas from the compressed gas source to the receiving vessel if the apparent value of gas density in the receiving vessel is less than the target density value.

Prior to disconnecting the dispensing connector, a final apparent value of gas density may be determined and may be used for billing purposes.

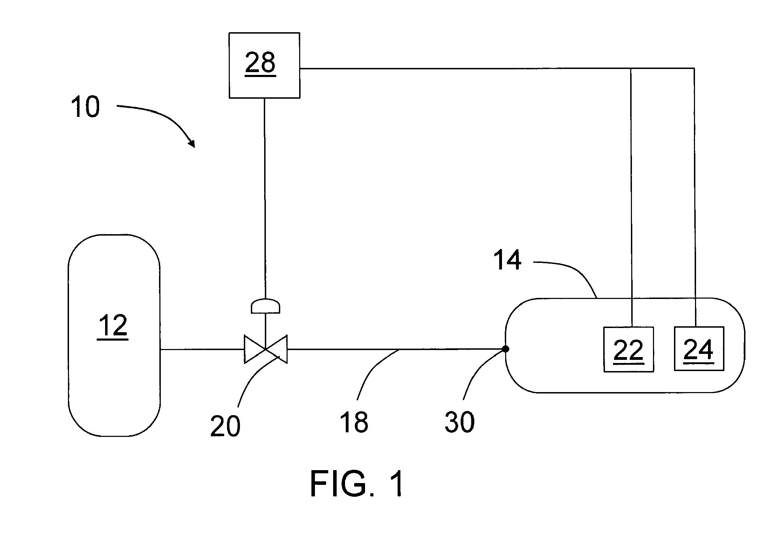

Referring to the drawings, wherein like reference numbers refer to like elements throughout the several views, there is shown in FIG. 1, an apparatus 10 for dispensing compressed gas into a receiving vessel 14 in accordance with an embodiment of the present invention. The apparatus **10** for dispensing compressed gas comprises a compressed gas source **12,** a means for controlling pressure ramp rate **20,** shown schematically as a valve, a conduit **18** linking the means for controlling pressure ramp rate **20** to a dispensing connector **30,** a pressure sensor **22,** a temperature sensor **24,** and an electronic controller means **28.**

The compressed gas source **12** of the various embodiments of the present invention may be a large volume storage vessel, hydril tubes, a compressed gas supply line, a compressor discharge line, or any combination of these elements suitable for use in supplying compressed gas to the receiving vessel in an amount and at a pressure great enough to achieve a desired fill rate, density, and/or pressure in the receiving vessel. The compressed gas source may also originate from a liquid source that has been pressurized and heated in a heat exchanger. In the case of hydrogen, the compressed gas source may also originate from metal hydrides or chemical hydrides.

The means for controlling pressure ramp rate **20** is in fluid communication with the compressed gas source **12** and regulates the flow from the compressed gas source **12** to the receiving vessel **14.** The means for controlling pressure ramp rate **20** is operable, i.e. opened and closed, via a signal from the electronic controller means **28.**

The conduit **18** links the means for controlling pressure ramp rate **20** to a dispensing connector **30.** The conduit **18** may be constructed of any material known in the art compatible with the compressed gas. The conduit **18** may be rigid or flexible.

The dispensing connector **30** may be any suitable connector for mating to the receiving vessel **14.** Dispensing connectors are conventional in the art. Dispensing connector **30** may be constructed of any material in the art compatible with the compressed gas.

The pressure sensor **22** and temperature sensor **24** may be disposed inside the receiving vessel **14** and transmit signals to the electronic controller means **28** for calculating the apparent gas density of the compressed gas inside the receiving vessel **14.** Sensors **22** and **24** may be incorporated in the receiving vessel **14** or they may be separate devices that are connected to the receiving vessel **14** at the dispensing location. The pressure sensor **22** and/or temperature sensor **24** may be integrated with the dispensing connector **30.** Multiple pressure and temperatures sensors may be used. The temperature sensor **24** may be integrated with the pressure sensor **22.** The sensors may include signal generators for generating a sensor signals for communicating with the electronic controller means **28.** The communication between the signal generators and the electronic controller means **28** may be hardwired or wireless. The signal may be relayed to the electronic controller means **28** by, for example, any conventional, commercially available devices or systems as desired.

To use the apparatus according to the invention, the dispensing connector **30** is connected to the receiving vessel **14.** As applicable, the electronic controller means **28** may be put in hardwired or wireless communication with the pressure sensor **22** and the temperature sensor **24.** The electronic controller means **28** may authorize the use of the station for an authorized user by any number of commonly used methods such as a credit card, debit card, or other magnetic or electronically encoded card, with our without an identifying Personal Identification Number or "PIN." The electronic controller means **28** may read a maximum rated gas density value for the receiving vessel **14** or the user may input the maximum rated gas density value. The electronic controller means **28** may determine the maximum rated gas density value based on the dispensing connector attached to the receiving vessel **14.** Dispensing connectors may have differing geometries depending on their pressure and/or density rating. The user may input a predetermined target density value corresponding to the desired fill amount. The authorized user may input an intermediate density value for the transition between the first pressure ramp rate range and the second pressure ramp rate range or the electronic controller means **28** may determine the intermediate density value automatically. The pressure sensor **22** and the temperature sensor **24** communicate appropriate signals to the electronic controller means **28** and the electronic controller means calculates the apparent gas density of the compressed gas in the receiving vessel **14.** Provided the apparent value of the gas density density in the receiving vessel is less than the predetermined target density value, the electronic controller means **28** causes means for controlling pressure ramp rate **20** to open, via a signal, and allows compressed gas to flow from the compressed gas source **12** through conduit **18** to the receiving vessel **14.**

During the transfer of compressed gas from the compressed gas source **12** to the receiving vessel **14,** pressure sensor **22** and temperature sensor **24** may continue to forward real time data to the electronic controller means **28,** which repeatedly calculates and compares the apparent value of gas density in the receiving vessel with the intermediate density value. While the apparent value of gas density is less than the intermediate density value, the electronic controller means **28** transmits a first signal or first series of signals to the means for controlling pressure ramp rate **20** thereby maintaining the pressure ramp rate within the first pressure ramp rate range.

When the apparent value of the gas density is equal to or greater than the intermediate density value, the electronic controller means **28** transmits a second signal or second series of signals to the means for controlling pressure ramp rate **20,** thereby changing or maintaining the pressure ramp rate within a second pressure ramp rate range.

When the apparent value of gas density in the receiving vessel **14** reaches the target density value, within a given tolerance, the electronic controller **28** then signals the means for controlling pressure ramp rate **20** to halt the flow of gas, via a third signal. The electronic controller means **28** may wait, for example, 1 to 60 seconds, or for example at least three seconds, while the vessel and the instrumentation equilibrate. If the density is within a specified tolerance to the target density value, then filling is complete. If the density is less than the rated density, filling may resume if desired, as above.

After filling is complete the dispensing connector **30** may be detached from the receiving vessel **14** and communication between the pressure sensor **22,** temperature sensor **24,** and electronic controller means **28** stopped.

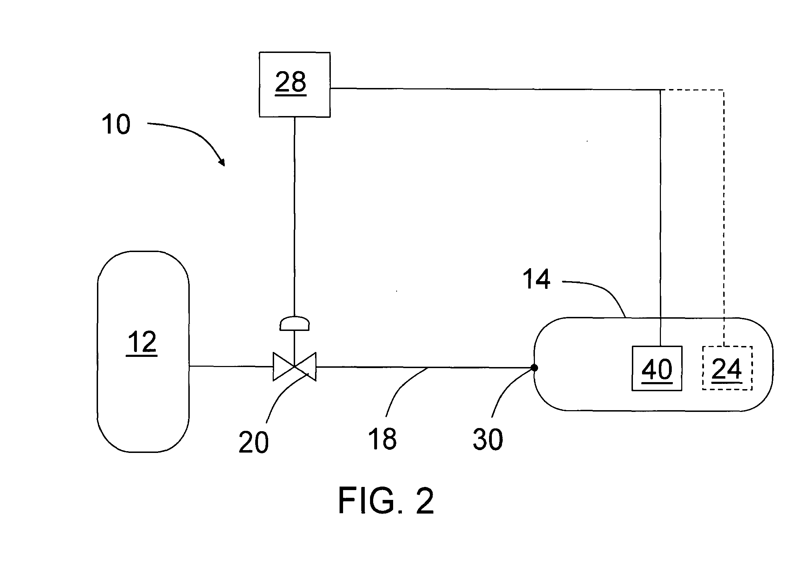

An apparatus **10** for dispensing compressed gas to a receiving vessel **14** in accordance with another embodiment of the present invention is shown in FIG. 2. The apparatus **10** for dispensing compressed gas comprises a compressed gas source **12,** a means for controlling pressure ramp rate **20,** a conduit **18** linking the means for controlling pressure ramp rate **20** to a dispensing connector **30,** a density sensor **40,** and an electronic controller **28.** The apparatus may optionally comprise a temperature sensor **24.**

The density sensor **40** may be disposed inside the receiving vessel **14** and senses the density of the fluid inside the receiving vessel **14.** The density sensor **40** may be incorporated in the receiving vessel **14** or it may be a separate device that is connected to the receiving vessel **14** at the dispensing location. Alternatively, the density sensor **40** may be integrated with the dispensing connector **30.** More than one density sensor may be used. The density sensor **40** may be a capacitive sensor, vibrating element sensor, or nucleonic sensor. For the case where the density sensor **40** is a capacitive sensor, a temperature sensor **24** may also be desired for improved accuracy of the density measurement. The temperature sensor **24** may be integrated with the density sensor **40.** The density sensor **40** includes a signal generator for generating a sensor signal corresponding to the density of the fluid inside the receiving vessel **14.** The signal generator is in communication with the electronic controller **28.** The communication between the signal generator of the density sensor **40** and the electronic controller **28** may be hardwired or wireless. The signal may be relayed to the electronic controller **28** by, for example, any conventional, commercially available devices or systems as desired.

A capacitive sensor is defined as any sensor that senses a fluid's dielectric properties. Examples of capacitive sensors are illustrated in US Pat. Nos. 3,421,077, 3,903,478, 4,835,456, and 5,027,076.

A vibrating element sensor is defined as any sensor that has a vibrating structure. It is known that, in a vibration density sensor, if a structure is vibrated at its resonant frequency while being immersed in a fluid, the density of the said fluid can be determined by measuring the resonant frequency. The vibrating element may be a vane as described in U.S. Pat. No. 3,677,067, a tuning fork as described in U.S. Pat No. 4,526,480, a cylinder as described in U.S. Pat. No. 6,029,501, a double-bar double-ended resonator or double-bar single-ended as described in U.S. Pat. No. 4,535,638, or any other vibrating element known in the art. The vibrating element, for example a tuning fork and vane, may be surrounded by the fluid to be measured or the fluid may flow inside of the vibrating element, for example a tube. Examples of vibrating element sensors are also illustrated in U.S. Pat. Nos. 3,426,593, 3,715,912, 4,574,639, 4,644,796, 4,644,803,

A nucleonic sensor is defined as any sensor that uses a radiation source and detector. The radiation may be x-ray as in U.S. Pat. No. 4,277,681, gamma-ray (γ-ray) as in U.S. Pat. Nos. 5,166,964 and 2,898,466, neutrons as in U.S. Pat. No. 4,582,991, beta-ray as in U.S. Pat. No. 2,757,290 or other radiation source known in the art. Nucleonic, also called radiation type, sensors are also discussed in U.S. Pat. Nos. 2,763,790, 2,968,729, 2,922,888, 3,196,271, and 6,548,814.

Use is similar to that described for the apparatus in FIG. 1.

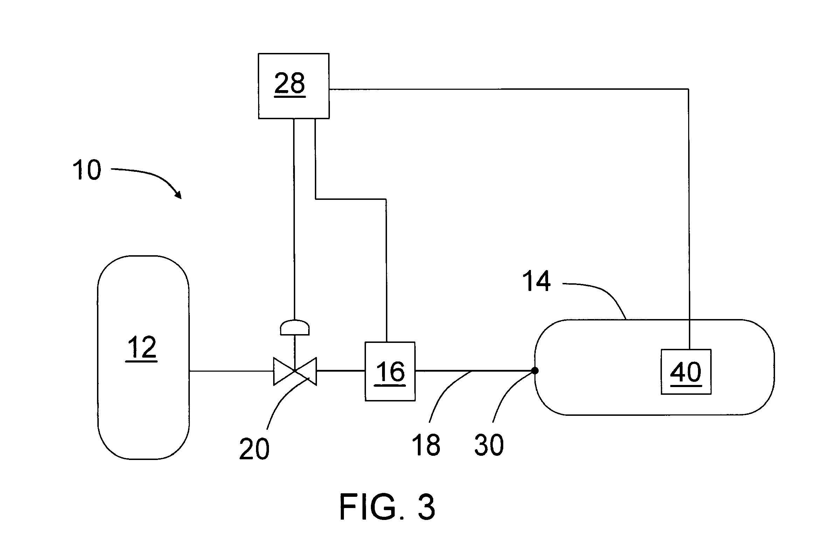

An apparatus **10** for dispensing compressed gas to a receiving vessel **14** in accordance with another embodiment of the present invention is shown in FIG. 3. The apparatus **10** for dispensing compressed gas comprises a compressed gas source **12,** a means for controlling pressure ramp rate **20,** shown schematically as a valve, a means for measuring an accumulated quantity of compressed gas dispensed 16, a conduit 18 in fluid communication with a dispensing connector 30, a density sensor 40, and an electronic controller means 28.

The electronic controller means 28 may calculate predetermined quantities of compressed gas to be added to the receiving vessel, calculate apparent values of gas density in the receiving vessel, compare the apparent values of gas density with intermediate density values and target density values, and transmit various signals to the means for controlling pressure ramp rate 20. It is understood that these functions may be accomplished by a single device or multiple devices, constituting the electronic controller means.

The means for measuring an accumulated quantity of compressed gas dispensed 16, for example a mass flow meter or functionally equivalent device, is in fluid communication with the means for controlling pressure ramp rate 20. The means for measuring an accumulated quantity of compressed gas dispensed 16 may be used to measure the accumulated quantity of compressed gas transferred and communicate the accumulated quantity to the electronic controller 28. The means for measuring an accumulated quantity of compressed gas dispensed 16 may be between the valve 20 and the receiving vessel 14 as shown in FIG. 3 or between the compressed gas source 12 and the means for controlling pressure ramp rate 20. Mass flow meters are conventional and well known in the art. The total mass flow may be determined by integrating the product of density and the volume flow rate. The volume flow rate may be determined by a conventional means, for example a turbine meter. The density may be determined by a density sensor, for example a capacitive sensor, vibrating element sensor, or nucleonic sensor. U.S. Pat. Nos. 3,715,912, 4,312,235, and 5,687,100 illustrate examples of mass flow meters comprising a vibrating element sensor. U.S. Pat. No. 4,881,412 illustrates an example of a mass flow meter comprising a nucleonic sensor.

The density sensor 40 may be disposed inside the receiving vessel 14 to measure the density of the fluid inside the receiving vessel 14. The density sensor may include a temperature sensor (not shown) to improve the accuracy of the density measurement. The density sensor 40 may be incorporated or integrated in the receiving vessel 14, incorporated or integrated with the dispensing connector 30, or it may be a separate device that is connected to the receiving vessel 14 at the dispensing location. More than one density sensor may be used. The density sensor **40** may be a capacitive sensor, vibrating element sensor, or nucleonic sensor. The density sensor **40** may transmit a signal to the electronic controller means **28.** The signal may be transmitted to the electronic controller **28** by hardwired or wireless means. The signal may be relayed to the electronic controller means **28** by, for example, any conventional, commercially available devices or systems as desired.

The electronic controller means **28** may calculate a predetermined quantity of compressed gas to be added to the receiving vessel to reach the intermediate density value and the target density value. For the sake of simplicity, an ideal gas equation of state will be used to illustrate the point. A 1 cubic meter receiving vessel with an initial pressure of 10 MPa and a temperature of 15 degrees Celsius has a molar density of about 4176 moles/m³. If the target density is 20882 moles/m³ then the amount that can be added is 16706 moles. This would correspond to a final pressure of 50 MPa at 15 degrees Celsius.

When the means for controlling pressure ramp rate **20** is open, compressed gas is transferred from the compressed gas source **12** to the receiving vessel **14.** As the compressed gas is transferred from the compressed gas source **12** to the receiving vessel **14,** the means for measuring an accumulated quantity of compressed gas dispensed **16** measures the mass flow rate and communicates the result to the electronic controller means **28,** which calculates the accumulated quantity of compressed gas transferred. The electronic controller **28** calculates the apparent value of the gas density in the receiving vessel and provides the appropriate signal or series of signals to the means for controlling pressure ramp rate **20** thereby controlling the pressure ramp rate of the compressed gas within the first or second pressure ramp rate range corresponding depending on the relation between the apparent value of the gas density and the intermediate and target density values.

Use of the apparatus shown in FIG. 3 is similar to that described for the apparatus in FIG. 1 except that the apparent value of gas density in the receiving vessel may be determined by calculating the apparent density from the accumulated quantity of compressed gas transferred and a reference apparent value of gas density.

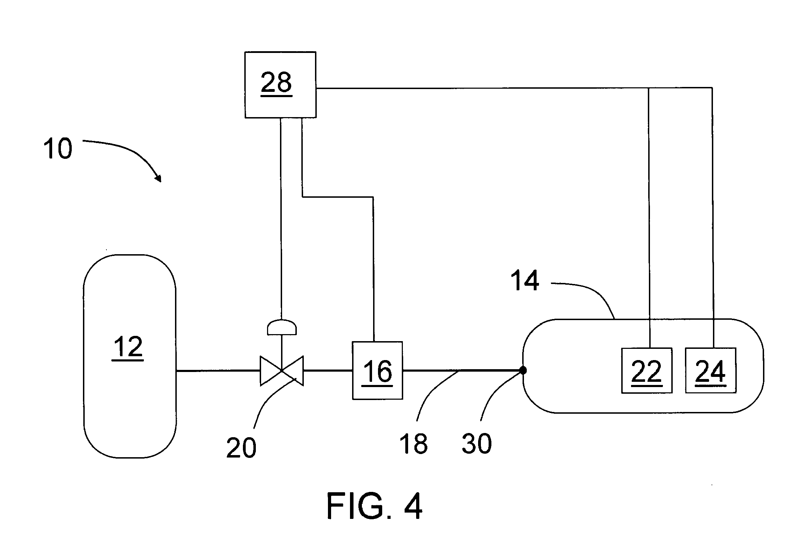

An apparatus **10** for dispensing compressed gas to a receiving vessel **14** in accordance with another embodiment of the present invention is shown in FIG. 4. The apparatus **10** for dispensing compressed gas comprises a compressed gas source **12,** a means for controlling pressure ramp rate **20,** shown schematically as a valve, a means for measuring an accumulated quantity of compressed gas dispensed **16,** a conduit **18** in fluid communication with a dispensing connector **30,** a pressure sensor **22,** a temperature sensor **24,** and an electronic controller means **28.** The apparatus in FIG. 4 is similar to the apparatus in FIG. 3 except that a pressure sensor **22** and a temperature sensor **24** are used in place of the density sensor **40.** The apparent value of the gas density may be calculated based on the pressure and temperature in the receiving vessel.

### EXAMPLE 1

### Constant, fast pressure ramp rate

Hydrogen, a compressed gas, was dispensed from hydril tubes, which is a compressed gas source, to a receiving vessel. The dispensing apparatus comprised a temperature sensor and pressure sensor in the dispensing conduit for obtaining the temperature and pressure in the receiving vessel. The receiving vessel had a temperature sensor and a pressure sensor onboard. The pressure sensors were Druck, Inc. PTX 7800 Series pressure transmitters, and the temperature sensors were Logan Enterprises, Inc. thermistors. The controller means was a Horner OCS210, an typical industrial PLC.

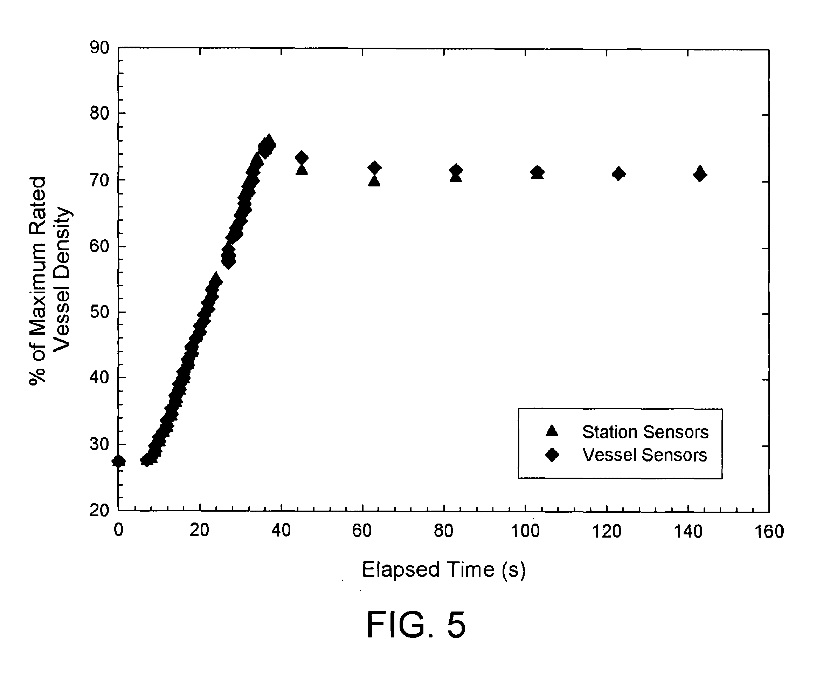

In Example 1, the time-averaged pressure ramp rate is maintained at a roughly constant rate of about 35 MPa/min throughout the fill. Results of apparent value of density in terms of % of the maximum rated density value of the receiving vessel is plotted as a function of elapsed filling time in FIG. 5. The apparent values of density based on the filling station sensors and the receiving vessel sensors are shown. The controller means adjusted the means for controlling time-averaged pressure ramp rate, a pressure regulator and valve, based on an apparent value of density calculated from the pressure sensor of the filling station and the temperature sensor in the receiving vessel.

The initial density in the receiving vessel was about 27% of the maximum rated density value of the receiving vessel. The target density was set to 80% of the maximum rated density value of the receiving vessel.

After about 36 seconds, the fill was complete. After the receiving vessel was equilibrated, the final apparent value of density was about 71.5% and 71.1% according to the station sensors and the receiving vessel sensors, respectively. The error in the final density is more than about 8%.

### EXAMPLE 2

### Constant, slow pressure ramp rate

The same apparatus as described in Example 1 was used for Example 2.

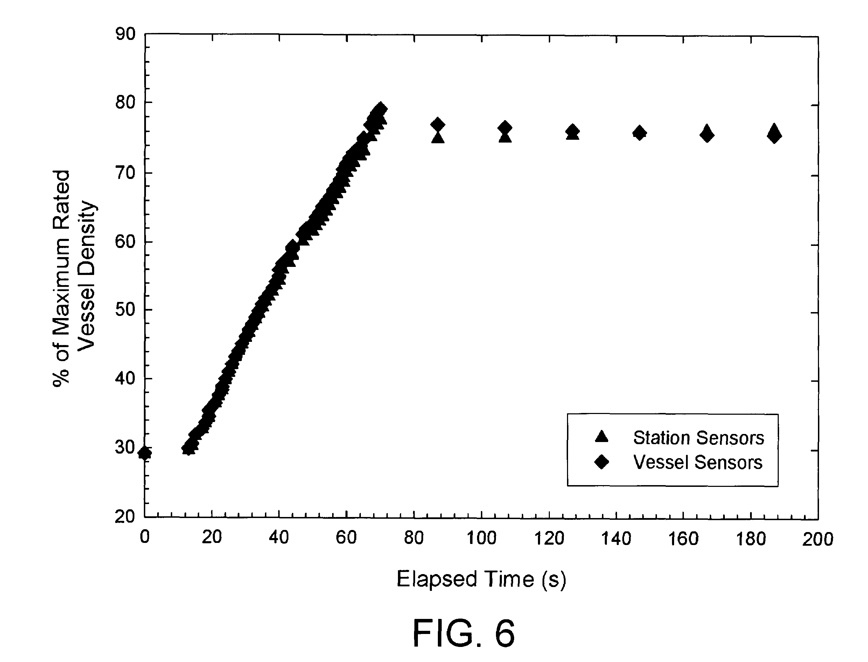

In Example 2, the time-averaged pressure ramp rate was maintained at a roughly constant rate of about 17.5 MPa/min throughout the fill. Results of apparent value of density in terms of % of the maximum rated density value of the receiving vessel is plotted as a function of filling time in FIG. 6. The apparent values of density based on the filling station sensors and the receiving vessel sensors are shown. The controller means adjusted the means for controlling time-averaged pressure ramp rate based on an apparent value of density calculated from the pressure sensor of the filling station and the temperature sensor in the receiving vessel.

The initial density in the receiving vessel was about 29% of the maximum rated density value of the receiving vessel. The target density was set to 80% of the maximum rated density value of the receiving vessel.

After about 70 seconds, the fill was complete. After the receiving vessel equilibrated, the final apparent value of density was about 76.5% and 75.8% according to the station sensors and the receiving vessel sensors, respectively. The error in the final density is about 3.5% and 4.2% according to the station sensors and the receiving vessel sensors, respectively. The slower fill provided a more accurate fill compared to the faster fill approach in Example 1.

### EXAMPLE 3

### Two-stage pressure ramp rate

The same apparatus as described in Example 1 was used for Example 3.

In Example 3, the time-averaged pressure ramp rate was varied in two stages. The initial time-averaged pressure ramp rate was 35 MPa/min and the later time-averaged pressure ramp rate was 3.5 MPa/min.

The initial density in the receiving vessel was about 24% of the maximum rated density value of the receiving vessel. The intermediate density value and target density were set to 70% and 80% of the maximum rated density value of the receiving vessel, respectively.

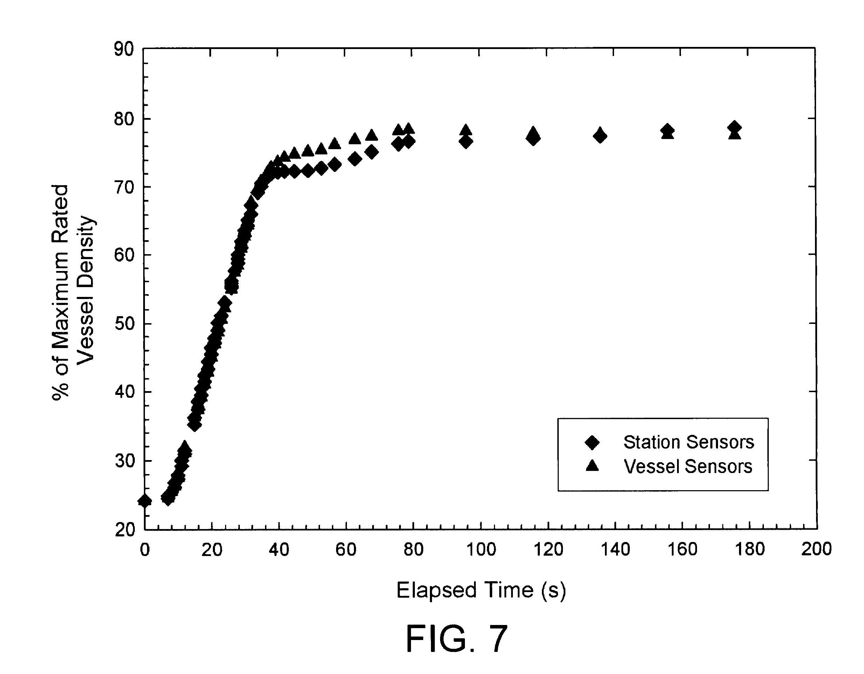

Results of apparent value of density in terms of % of the maximum rated density value of the receiving vessel is plotted as a function of filling time in FIG. 7. The apparent values of density based on the filling station sensors and the receiving vessel sensors are shown. The controller means adjusted the means for controlling time-averaged pressure ramp rate based on an apparent value of density calculated from the pressure sensor of the filling station and the temperature sensor in the receiving vessel.

After about 35 seconds, the time-averaged pressure ramp rate was adjusted from about 35 MPa/min to about 3.5 MPa/min. After a total of about 76 seconds, the fill was complete. After the receiving vessel equilibrated, the final apparent value of density was about 78.7% and 77.5% according to the station sensors and the receiving vessel sensors, respectively. The error in the final density is about 1.3% and 2.5% according to the station sensors and the receiving vessel sensors, respectively. The two-stage time-averaged pressure ramp rate fill provided a more accurate fill compared to the approaches in Examples 1 and 2.

Although illustrated and described herein with reference to specific embodiments, the present invention nevertheless is not intended to be limited to the details shown. Rather, various modifications may be made in the details within the scope and range of equivalents of the claims without departing from the spirit of the invention.

## Claims

1. A method for dispensing a compressed gas from a compressed gas source into a receiving vessel comprising:
initiating the flow of the compressed gas by a means for controlling pressure ramp rate thereby transferring the compressed gas from the compressed gas source to the receiving vessel within a first pressure ramp rate range;
transmitting a first signal or first series of signals from an electronic controller means to the means for controlling pressure ramp rate thereby maintaining a pressure ramp rate of the compressed gas within the first pressure ramp rate range by the means for controlling pressure ramp rate when the apparent value of the gas density in the receiving vessel is less than or equal to an intermediate density value;
transmitting a second signal or second series of signals from the electronic controller means to the means for controlling pressure ramp rate thereby changing or maintaining the pressure ramp rate of the compressed gas within a second pressure ramp rate range by the means for controlling pressure ramp rate when the apparent value of the gas density in the receiving vessel is greater than or equal to the intermediate density value, wherein the time-averaged pressure ramp rate of the second pressure ramp rate range is less than the time-averaged pressure ramp rate of the first pressure ramp rate range; and
transmitting a third signal or third series of signals from the electronic controller means to the means for controlling pressure ramp rate thereby terminating the flow of the compressed gas by the means for controlling pressure ramp rate when the apparent value of the gas density in the receiving vessel is equal to or greater than a target density value, wherein the target density value is greater than the intermediate density value.

2. The method of claim 1 further comprising:
connecting a dispensing connector to the receiving vessel thereby providing a fluid communication between the compressed gas source and the receiving vessel.

3. The method of claim 1 or 2 further comprising:
determining the target density value for the receiving vessel.

4. The method of claim 3 further comprising:
storing the target density value in the electronic controller means.

5. The method of any one of claims 1 to 4 further comprising:
determining the intermediate density value.

6. The method of claim 5 further comprising:
storing the intermediate density value in the electronic controller means.

7. The method of any one of claims 1 to 6 further comprising:
repeatedly calculating the apparent density of the compressed gas in the receiving vessel thereby obtaining the apparent value of the gas density in the receiving vessel.

8. The method of claim 7 further comprising:
transmitting a density signal from a density sensor; and
wherein the step of repeatedly calculating the apparent density of the compressed gas utilizes the density signal.

9. The method of claim 7 or 8 further comprising
transmitting a pressure signal characterizing pressure from a pressure sensor to the electronic controller means;
transmitting a temperature signal characterizing temperature from a temperature sensor to the electronic controller means; and
wherein the step of repeatedly calculating the apparent density of the compressed gas utilizes the pressure signal and the temperature signal.

10. The method of any one of claims 7 to 9 further comprising:
measuring an accumulated quantity of compressed gas transferred thereby obtaining a value of the accumulated quantity of compressed gas transferred; and
wherein the step of repeatedly calculating the apparent density of the compressed gas utilizes the value of the accumulated quantity of compressed gas transferred.

11. The method of claim 10 further comprising:
determining a reference apparent value of the gas density in the receiving vessel at a reference time;
calculating a first quantity of compressed gas to be added to the receiving vessel as a function of at least the target density and the reference apparent value of the gas density; and
transferring the first quantity of compressed gas to the receiving vessel.

12. The method of any one of claims 1 to 11 further comprising:
waiting at least 1 seconds for the receiving vessel to stabilize after the step of transmitting the third signal or third series of signals;
obtaining the apparent value of the gas density in the receiving vessel subsequent to the step of waiting at least 1 second by at least one of a density sensor, a pressure sensor, and a temperature sensor; and
transmitting a fourth signal or fourth series of signals from the electronic controller means to the means for controlling pressure ramp rate thereby allowing the flow of compressed gas from the compressed gas source to the receiving vessel if the apparent value of the gas density in the receiving vessel subsequent to the step of waiting at least 1 second is less than the target density value.

13. The method of any one of claims 1 to 12 further comprising:
verifying an authorized user prior to the step of initiating the flow of the compressed gas by the means for controlling pressure ramp rate.

14. The method of any one of claims 1 to 13 wherein the intermediate density value is 75% to 95% of the target density value.

15. The method of any one of claims 1 to 14 wherein the target density value is within 5% of a maximum rated gas density value of the receiving vessel.

16. The method of any one of claims 1 to 15 wherein the time-averaged pressure ramp rate of the second ramp rate range is less than 50% of the time-averaged pressure ramp rate of the first pressure ramp rate range.

17. The method of any one of claims 1 to 16 wherein the means for controlling pressure ramp rate varies the pressure ramp rate within the first pressure ramp rate range when the apparent value of the gas density is less than or equal to the intermediate density value.

18. The method of any one of claims 1 to 17 wherein the means for controlling pressure ramp rate varies the pressure ramp rate within the second pressure ramp rate range when the apparent value of the gas density is greater than or equal to the intermediate density value.

19. The method of claim 18 wherein the means for controlling pressure ramp rate decreases the pressure ramp rate within the second pressure ramp rate range as the apparent value of the gas density in the receiving vessel increases toward the target density value.
